Europäisches Patentamt

European Patent Office

Office européen des brevets

(11) Publication number: **0 107 000**
A2

# EUROPEAN PATENT APPLICATION

(21) Application number: **83108880.2**

(22) Date of filing: **08.09.83**

(51) Int. Cl.³: **C 04 B 35/00,** C 04 B 35/16, H 05 K 3/46

(30) Priority: **27.09.82 US 423964**

(43) Date of publication of application: **02.05.84** Bulletin 84/18

(84) Designated Contracting States: **DE FR GB**

(71) Applicant: **International Business Machines Corporation, Old Orchard Road, Armonk, N.Y. 10504 (US)**

(72) Inventor: **Foss, Catherine Lorraine, 503 Chelsea Cay, Wappingers Falls New York 12590 (US)**
Inventor: **Herron, Lester Wynn, No. 66 Dartantra Drive, Hopewell Junction New York 12533 (US)**
Inventor: **Nufer, Robert Wolff, Rd. No. 3, Box 229 Tamarack Drive, Hopewell Junction New York 12533 (US)**

(74) Representative: **Oechssler, Dietrich, Dr.rer.nat. Dipl.-Chem., Schönaicher Strasse 220, D-7030 Böblingen (DE)**

(54) Method of preparing a slurry of a ceramic oxide and a liquid premix.

(57) A dry mass of the ceramic oxide is deagglomerated to a predetermined particle packing density. Then the deagglomerated dry mass is combined with a liquid premix of binders, plasticizers and solvents to form the slurry.

The method is used in producing green sheets shrinking reproducibly on firing. The ceramic oxide green sheet density is only a function of the starting ceramic oxide density and the parameters of the deaggregating process, like the pressure applied to the dry mass of ceramic oxides, so that the ceramic oxide green sheet density may be precisely controlled. The green sheets are applicable in forming integrated circuits mounting substrates like multilayer ceramic mounting substrates.

EP 0 107 000 A2

METHOD OF PREPARING A SLURRY OF A CERAMIC OXIDE AND A
LIQUID PREMIX

The invention relates to a method of preparing a slurry
containing a ceramic oxide and a liquid premix of binders, plasticizers and solvents and an application of
said method. Slurries of said kind are applied for producing ceramic oxide green sheets, including those being used in multilayer ceramic substrates. Multilayer
ceramic substrates have an ever increasing importance
in electronics as integrated circuit mounting substrates.

In the current state of the integrated circuit packaging art, 130 or more integrated circuit chips may be
mounted on a large multilayer ceramic (MCL) substrate.
All power and signal connections between the chips are
provided by multiple conductor layers within the ceramic substrate.

The ceramic substrate is fabricated by sintering a
plurality (30 or more) of stacked ceramic green sheets.
The green sheets are formed by casting a slurry comprising a ceramic oxide (typically alumina, $Al_2O_3$) and
the requisite binders, plasticizers and solvents, onto
a tape, allowing the cast slurry to dry, and then cutting into individual green sheets. A large number of
closely spaced vias (holes) are punched in each green
sheet, filled with metal (typically molybdenum), and
connected to one another by molybdenum lines screened
on the surface of the green sheet. The green sheets are
laminated and sintered or fired to form a solid ceramic
substrate having multiple metallization layers therein.
A plurality of integrated circuits are then mounted
thereon.

FI 982 005

It is well known that shrinkage occurs during green sheet sintering. The amount of shrinkage must be precisely controlled so that the metal filled vias are properly aligned with respect to the integrated circuit mounting pads. With today's high density packaging, shrinkage tolerances of one tenth of one percent or greater are required. It is well known that the fired shrinkage depends upon the density of the unfired green sheet. Thus, in order to ensure precisely controlled fired shrinkage the unfired alumina green sheet density must be precisely controlled.

Moreover, it is also well known that the unfired alumina green sheet density depends upon the degree of agglomeration (clumping) of the alumina particles therein. More specifically, although the density of alumina is 3.98 g/cc, commercially available alumina powders have a bulk density of about 1 g/cc because of the presence of clumps or agglomerates of alumina particles therein. The degree of agglomeration varies from lot to lot of commercially available alumina. Thus, in order to obtain the requisite firing shrinkage, some of the agglomerates must be broken (deagglomerated) into smaller clumps or individual particles. For example, in order to obtain a fired shrinkage of 17.2 ± 0.1% in the planar dimension, an unfired green sheet must have a density of 2.00 ± 0.05 g/cc.

The current state of the art process for forming ceramic green sheets includes the step of ball milling an alumina slurry in order to deagglomerate at least some of the agglomerated alumina particles therein and obtain the requisite alumina green sheet density.

FI 982 005

A ball mill is a large cylinder having a quantity of balls therein. In order to form the alumina slurry, alumina powder and a liquid premix containing the requisite organic binders, plasticizers and solvents are placed in the ball mill. The ball mill is rotated at about 35 rpm for 7 to 20 hours to deagglomerate the alumina and form a slurry having the required alumina packing density. After ball milling, the slurry is cast onto a tape. The slurry is then dried, stripped from the tape and cut into green sheets. The green sheets are punched, metallized, laminated and sintered to form the multilayer ceramic substrate.

The above described ball milling process is very time consuming. Moreover, the ball milling time for achieving a predetermined alumina packing density varies considerably and unpredictably over time. Among the interacting variables which contribute to unpredictable ball milling time are:

1.	the bulk density of the alumina powder which may vary from lot to lot;

2.	the viscosity of the liquid premix which may vary because of specific differences in the organic constituents thereof;

3.	the efficiency of the ball mill which depends, among other things, upon the age and composition of the grinding media;

4.	the impurity levels in the alumina and the liquid premix; and

5. the sequence in which the liquid premix and alumina are introduced into the ball mill.

As a result of these and other variables, it is impossible to determine the proper ball milling time for a lot of alumina powder from the mere knowledge of the starting alumina packing density. Thus, for each lot of alumina, a number of ball milling operations must be completed and the cast alumina green sheet density determined in order to establish the appropriate ball milling time. The ball milling time often must be reestablished within a given lot of alumina as the above discussed interacting variables change during the ball mill operation. Achieving the requisite alumina green sheet density is thus a trial and error process which is not conducive to mass production at the requisite tolerances.

One method for deagglomerating ceramic particles without the necessity of ball milling is disclosed in copending application Serial Number 371,769 filed April 26, 1982 on behalf of L. W. Herron and R. W. Nufer and assigned to the assignee of the present invention. Disclosed is a method for deagglomerating ceramic particles by adding a liquid binder to the ceramic powder in an amount equal to or a little greater than the void volume of the ceramic powder at the desired final density, and applying a force to the mixture until the liquid binder occupies the total void volume of the powder.

It is the object of the invention to provide a rapid and precisely controllable method of forming a ceramic oxide slurry having a predetermined ceramic oxide packing density and an application of this method in

FI 982 005

the production of green sheets shrinking reproducibly within very small tolerances on firing.

This object is achieved by a method as indicated at the beginning of this specification having the features of the characterizing part of claim 1 and an application of this method having the features of the characterizing part of claim 8.

By employing the method of the present invention, controlled deagglomeration occurs rapidly, if performed with the dry mass of ceramic oxide, preferably through compression, rather than over a number of hours as with ball milling the ceramic oxide slurry. Moreover, the ceramic oxide packing density after compression depends only upon the starting packing density and the pressure used. Thus, for a given lot of ceramic oxide, like alumina, the requisite pressure may be determined by merely measuring the starting packing density of the ceramic oxide powder. None of the other variables listed in connection with ball milling are present so that the same pressure may be used for all the ceramic oxide powder in a given ceramic oxide lot (assuming a consistent starting density within the lot).

In a preferred embodiment of the invention, the ceramic oxide is compressed by providing a piston and cylinder arrangement, into which a dry mass of ceramic oxide powder is placed. The predetermined compressive force is applied to the piston to pelletize the ceramic oxide and deaggregate the agglomerates therein. The pellet may then be mixed with the requisite premix in a mixer or blender to form a slurry.

FI 982 005

0107000

Since deagglomerated pellets are formed from a dry mass of ceramic oxide, they may be stored subsequent to pelletizing without affecting the packing density thereof. Thus, a large quantity of ceramic oxide may be deagglomerated and stored, and later combined with the premix as needed.

To produce green sheets with the slurry produced according to the inventive method the slurry is coated onto a base material, dried, stripped and sintered. Green sheets intended to be transformed into integrated circuit mounting substrates, like IC mounting MLC substrates, are cut to a predetermined size, provided with through holes, metallized and laminated with other processed green sheets prior to the sintering step.

Advantageous embodiments of the inventive method are disclosed in the subclaims.

The invention will become more apparent from the following detailed description taken in conjunction with the accompanying drawings, wherein:

Fig. 1    is a graph of green sheet density versus ball milling time for the state of the art ball milling method.

Fig. 2    is a graph of green sheet density versus pressure for the compaction method of the present invention.

Fig. 3    illustrates an apparatus for practicing the present invention.

FI 982 005

In order to better illustrate the method of the present invention, the state of the art ball milling method for fabricating ceramic green sheets will first be described. In the ball milling method, agglomerates of ceramic oxide are deagglomerated by ball milling a ceramic oxide slurry. More particularly, the ceramic oxide slurry may comprise a mixture of 89% by weight of alumina powder and 11% by weight glass frit in a liquid premix comprising organic binders (e.g., polyvinyl butyral), plasticizers (e.g., dipropylene glycol dibenzoate) and solvents (e.g., methanol and methylisobutylketone). The slurry is placed in a ball mill and milled for 7-20 hours in order to obtain the requisite alumina packing density. It will be noted that particular composition of the glass frit and liquid premix and the relative proportions thereof do not form part of the present invention.

After ball milling, the slurry is cast onto a tape by doctor blading or other well known techniques. The coated tape is then dried to solidify the alumina coating, and the tape is stripped off the carrier so that the unfired alumina green sheet remains. The green sheet is then cut into small sheets, and via holes are punched therein. A metal paste is screened into the via holes and onto the green sheet surface to form metallization patterns. A plurality of metallized green sheets are then assembled, laminated and sintered to form a multilayer ceramic substrate.

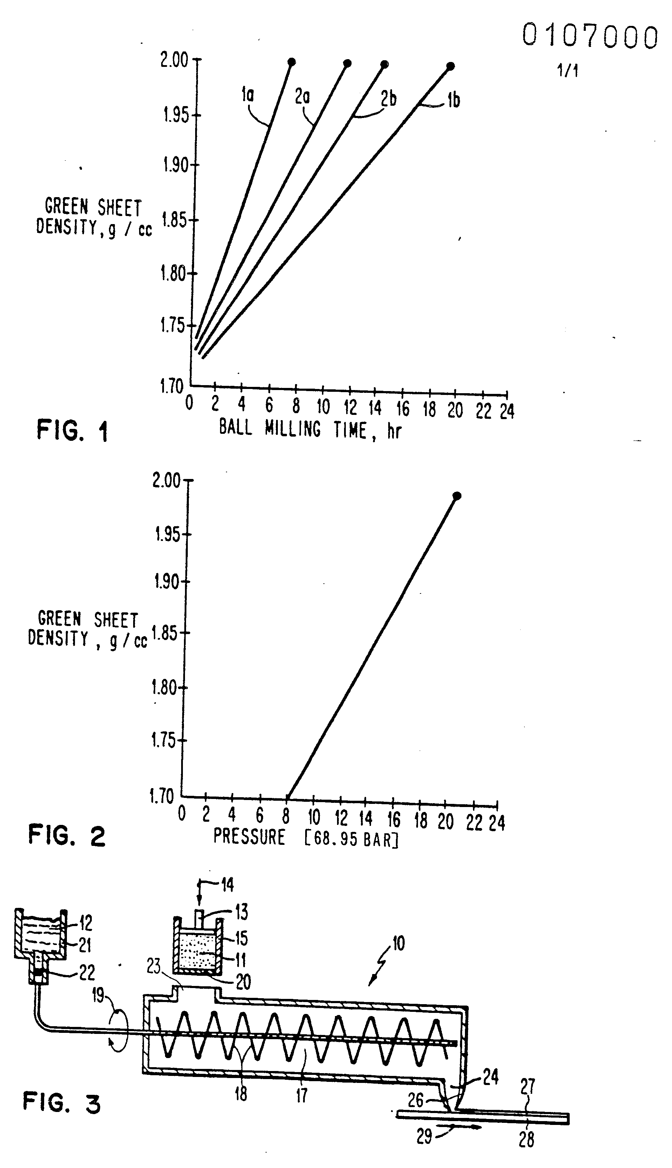

Fig. 1 illustrates the variability of ball milling time for obtaining a given green sheet density. More particularly, curves 1a and 2a illustrate ball milling times for two different lots of the same alumina (i.e., two

FI 982 005

lots of Alcan C75-RG alumina). In order to achieve a 2 g/cc green sheet density, ball milling times of 7 and 11 hours were required for the two lots of alumina. These differences are attributable to many factors including changes in ball mill efficiency over time, slight changes in liquid premix composition and impurity level changes in the alumina and premix.

Curves 1b and 2b of Fig. 1 illustrate ball milling times for alumina samples from the same lots as curves 1a and 2a, respectively. In curves 1b and 2b a different form of polyvinyl butyral was used in the liquid premix. More particularly, in curves 1a and 2a Butvar B-98 (Trademark of Monsanto Company) was employed while in curves 1b and 2b Butvar B-90 (Trademark of Monsanto Company) was employed. For curves 1b and 2b, the ball milling time to achieve 2 g/cc green sheet density was 14 and 20 hours, respectively. Comparison of curves 1a and 2a with curves 1b and 2b illustrates the variability of milling time caused by a change in one of the components of the liquid premix. In conclusion, ball milling time for achieving a given alumina packing density varies in an unpredictable manner so that tiral and error techniques must be used to determine the proper ball milling time for each ball milling operation.

A method of forming a multilayer ceramic substrate in accordance with the present invention will now be described. In accordance with the present invention the requisite ceramic oxide packing density is achieved by compacting a dry mass of ceramic oxide before it is combined with the liquid premix to form a slurry. Thus, a dry mass of alumina powder is deagglomerated by applying a predetermined pressure thereto. This predetermined pressure is a function only of the starting alumina packing density and the required alumina green sheet density, so that for a given lot of alumina the starting packing density may be measured and the requisite pressure determined. This pressure may then be applied to all subsequent batches of alumina within the lot because the variables inherent in the ball milling process are not present.

After the alumina is compacted to the requisite packing density, it may be stored for later use. To form the ceramic oxide slurry, the compacted alumina is mixed with a liquid premix (containing glass frit, organic binders, plasticizers and solvents) in a blender or other mixing apparatus. The multilayer ceramic substrate is then formed by doctor blading the slurry onto a tape, drying, separating the green sheet from the tape, cutting, punching, screening, laminating and sintering as was described above with regard to the ball milling process.

Fig. 3 illustrates a slurry forming apparatus which may be used to practice the present invention. Slurry forming apparatus 10 includes a piston 13 and cylinder 15 arrangement for compacting a dry mass of alumina 11 therein by applying the requisite pressure to piston 13 in the direction of arrow 14. The dry mass of alumina may include a few tenths of one percent of lubricant to ensure more uniform compaction. Application of pressure to alumina 11 forms an alumina pellet within the cylinder. The pellet may be ejected through movable cylinder floor 20 and stored for later use. Since the pellet is formed of a dry mass of alumina, it may be stored for later use without affecting the alumina packing density

0107000

thereof. Alternatively, the pellet may be immediately placed into auger 17 through opening 23 thereof.

A vat 21 of liquid premix 12 is also connected to auger 17 via valve 22. The alumina pellet and liquid premix are mixed within auger 17 by rotation of blades 18 in the direction of arrow 19. Mixing need only occur for a sufficient time to break up the alumina pellet and disperse the alumina within the liquid premix to form a slurry.

After mixing, the slurry exits the auger at exit 24 and is applied to tape 28 via doctor blade 26. Tape 28 travels in the direction of arrow 29 so that a coating 27 of slurry is formed thereon. The coating is then dried and separated from the tape to form ceramic green sheets. The green sheets are then processed as described above.

Fig. 2 is a graph of green sheet density versus pressure for alumina of the same lot as Fig. 1 curves 1a and 1b. In order to obtain the data for Fig. 2, the alumina was placed into a piston/cylinder arrangement (similar to that described in connection with Fig. 3) and compacted into a 2.54 cm diameter, 1.65 mm thick pellet having a packing density of about 2.4 g/cc. Formation of a green sheet from the compacted pellet results in a green sheet density of 2 g/cc. It will be seen that to achieve a green sheet density of 2 g/cc a pressure of about 1447.95 bar (21000 psi) was required.

Once the requisite pressure is determined for a given lot, all of the alumina within the lot may be processed thereat because starting alumina packing density is the only variable when practicing the present invention.

FI 982 005

For different alumina lots the requisite pressure may be found by trial and error (a process which only takes minutes due to the instantaneous compaction time) or by computation from previous lots based on the relationship depicted in Fig. 2. Similarly, since the requisite pressure is a function of pellet diameter and thickness, the requisite pressure must be determined for a pellet diameter other than 2.54 cm or pellet thickness other than 1.65 mm.

The green sheet density data for Fig. 2 may be obtained by mixing the pellet and liquid premix in an auger or other mixer, and doctor blading, drying and separating to form a green sheet (as described in connection with Fig. 3). Alternatively, green sheet density data may be obtained without actually forming a green sheet, by measuring sediment density. Sediment density is measured by dispersing the compacted alumina in the liquid premix and then allowing the particles to settle under the force of gravity until the supernatent liquid premix is free of dispersed alumina particles. Sediment density is then calculated from the known weight of alumina and the measured volume of the sedimented alumina cake. The measured sediment density corresponds to the green sheet density except for a small correction which may be made for the components of the liquid premix (e.g., organic binders) which remain in the green sheet after drying but which are not included in the measured weight of the sedimented alumina cake.

It will be apparent to those having skill in the art that means other than the piston cylinder arrangement may be employed for compacting the dry mass of alumina. For example, hydrostatic pressure or other forms of pressure may be employed. In all embodiments aggregates

0107000

of the ceramic oxide are deaggregated by the application of pressure to a dry mass of ceramic oxide prior to mixing with the liquid premix so that all of the variables inherent in ball milling are avoided.

FI 982 005

0107000

## C L A I M S

1. Method of preparing a slurry containing a ceramic oxide and a liquid premix of binders, plasticizers and solvents, characterized by the steps of:

   deagglomerating a dry mass of said ceramic oxide to a predetermined particle packing density; and

   combining the deagglomerated dry mass with said liquid premix to form a slurry.

2. Method according to claim 1 wherein said deagglomerating step comprises the step of pelletizing said dry mass of said ceramic oxide to said predetermined particle packing density.

3. Method according to claim 1 or 2 wherein said deagglomerating step comprises the step of applying a predetermined pressure to said dry mass of ceramic oxide to thereby compress said dry mass of ceramic oxide to said predetermined particle packing density.

4. Method according to claim 2 or 3 wherein the ceramic substrate is compressed by providing a piston and a cylinder arrangement, into which a dry mass of the ceramic oxide powder is placed and wherein the predetermined compressive force is applied to the piston to pelletize the ceramic oxide.

5. Method according to any one of claims 1 to 4 wherein said ceramic oxide is alumina.

FI 982 005

6. Method according to claim 5 wherein the dry mass of alumina has a density of about 1 g/cc.

7. Method according to claim 5 or 6 wherein the alumina slurry has an alumina particle packing density of about 2 g/cc.

8. Application of the method according to any one of claims 1 to 7 in producing green sheets shrinking reproducibly on firing by coating said ceramic oxide slurry onto a base material, drying the ceramic oxide slurry coating and stripping it from the base material.

9. Application according to claim 8, wherein the green sheets are provided with through holes and metallized prior to the stripping and fired after the stripping.

10. Application according to claim 9, wherein prior to the firing a plurality of green sheets are aligned to each other and laminated.

FI 982 005

GREEN SHEET DENSITY, g / cc

BALL MILLING TIME, hr

FIG. 1

GREEN SHEET DENSITY, g / cc

PRESSURE [68.95 BAR]

FIG. 2

FIG. 3